# EUROPEAN PATENT APPLICATION

(11) **EP 4 258 713 A1**
(43) Date of publication of application: **11.10.2023**
(21) Application number: 20963962.4
(22) Date of filing: 03.12.2020
(51) Int. Cl.: H04W 8/00, H04W 72/02, H04W 48/12

(54) **COMMUNICATION METHOD AND COMMUNICATION DEVICE UNDER MULTIPLE CONNECTIONS**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2020/133703
(87) International publication number: WO 2022/116116

(57) **Abstract**

The present disclosure provides a communication method and a communication device. The communication method may comprise: determining a first message frame which comprises first information associated with spatial reuse of multiple connections supported by an access point, wherein the first information is used for performing spatial reuse during data exchange between the access point and a station; and sending the first message frame. The technical solution provided by embodiments of the present disclosure can improve spectrum utilization efficiency and enhance system throughput.

## Description

### TECHNICAL FIELD

The disclosure relates to a communication field, in particular to a communication method on multiple links and a communication device on multiple links.

### BACKGROUND

Now, the current Wi-Fi technology studies about bandwidth transmission of 320MHz, aggregation and coordination of multiple frequency bands or others, which expects to increase the speed and throughput by at least four times compared with the existing standard. The main application scenarios include video transmission, Augmented Reality (AR), Virtual Reality (VR), or other situations.

The "aggregation and coordination of multiple frequency bands" means that devices communicate with each other in frequency bands of 2.4GHz, 5.8GHz, and 6 to 7GHz at the same time. For the communication performed among devices in multiple frequency bands at the same time, a new Media Access Control (MAC) mechanism needs to be defined for management. In addition, low-latency transmission is expected to be supported by the aggregation and coordination of multiple frequency bands.

Now, the maximum bandwidth supported by the aggregation and coordination of multiple frequency bands is 320MHz (160MHz+160MHz). In addition, 240MHz (160MHz+80MHz) and other bandwidths supported by the existing standard are also supported.

In the current Wi-Fi technology, communication on multiple links is supported. For example, both an Access Point (AP) and a station (STA) in the current wireless communication system may be multi-link devices (MLDs), i.e., supporting a function of simultaneously sending and/or receiving data on multiple links at a moment. Therefore, there may be multiple links between the AP MLD and the STA MLD.

In the existing standards, to increase the utilization rate of spectrum, Spatial Reuse (SR) technology is introduced, such as parameterized SR (PSR) mechanism. However, the existing PSR mechanism only supports single-link applications and is not applicable to multi-link communication as mentioned above.

### SUMMARY

Aspects of the disclosure will at least address the above problems and/or drawbacks. Embodiments of the disclosure provide the following technical solutions.

A communication method is provided according to embodiments of the disclosure. The communication method is performed by an access point (AP). The communication method includes: determining a first message frame, in which the first message frame includes first information associated with spatial reuse of multiple links supported by the AP, and the first information is used for the spatial reuse in data interaction between the AP and a station (STA); and sending the first message frame.

A communication method is provided according to embodiments of the disclosure. The communication method is performed by a station (STA). The communication method includes: receiving a first message frame, in which the first message frame includes first information associated with spatial reuse of multiple links supported by an access point (AP) and the first information is used for the spatial reuse in data interaction between the AP and a station (STA); and performing a communication operation based on the first information.

A communication device is provided according to an embodiment of the disclosure. The communication device is applicable to an access point (AP). The communication device includes: a processing module configured to determine a first message frame, in which the first message frame includes first information associated with spatial reuse of multiple links supported by the AP and the first information is used for the spatial reuse in data interaction between the AP and a station (STA); and a communication module configured to send the first message frame.

A communication device is provided according to an embodiment of the disclosure. The communication device is applicable to a station (STA). The communication device includes: a communication module configured to receive a first message frame, in which the first message frame includes first information associated with spatial reuse of multiple links supported by an access point (AP) and the first information is used for the spatial reuse in data interaction between the AP and the STA; and a processing module configured to control the communication module to perform a communication operation based on the first information.

An electronic device is provided according to an embodiment of the disclosure. The electronic device includes a memory, a processor and a computer program stored on the memory and executable by the processor. When the computer program is executed by the processor, the above method is performed.

A computer-readable storage medium is provided according to an embodiment of the disclosure. The computer-readable storage medium has a computer program stored thereon. When the computer program is executed by a processor, the above method is performed.

The technical solutions according to embodiments of the disclosure can improve the utilization efficiency of spectrum and system throughput.

### BRIEF DESCRIPTION OF THE DRAWINGS

The above and additional features of the embodiments of the disclosure will become more apparent by describing the embodiments of the disclosure in detail with reference to the accompanying drawings.
FIG. 1 is a schematic diagram illustrating a wireless communication scenario.
FIG. 2 is a flowchart illustrating a communication method according to embodiments.
FIG. 3 is a flowchart illustrating a communication method according to embodiments.
FIG. 4 is a flowchart illustrating another communication method according to embodiments.
FIG. 5 is a block diagram illustrating a communication device according to embodiments.

### DETAILED DESCRIPTION

The following description with reference to the accompanying drawings is provided to fully understand the various embodiments of the disclosure as defined by the appended claims and their equivalents. The various embodiments of the disclosure include various specific details, but such specific details are considered to be exemplary only. In addition, descriptions of well-known techniques, functions and constructions may be omitted for the sake of clarity and brevity.

Terms and words used in the disclosure are not limited to written meanings, but are used by inventors to enable a clear and consistent understanding of the disclosure. Therefore, for those skilled in the art, the description of various embodiments of the disclosure is provided only for the purpose of illustration, but not for the purpose of limitation.

It is understandable that "a", "an", "said", and "the" in singular forms used herein can also include plural forms, unless clearly indicated in the context otherwise. It should be further understood that the word "include" used in the disclosure refers to the existence of described features, integers, steps, operations, elements, and/or assemblies, but does not exclude the existence or addition of one or more other features, integers, steps, operations, elements, assemblies, and/or groups thereof.

It is understandable that although the terms "first" and "second" and the like can be used herein to describe various elements, these elements should not be limited by these terms. These terms are only used to distinguish one element from another. Therefore, a first element discussed below may be referred to as a second element without departing from the teaching of the embodiments.

It is understandable that when an element is referred to as being "connected" or "coupled" to another element, it may be directly connected or coupled to other elements, or intervening elements may also exist. In addition, as used herein, "connected" or "coupled" may include wireless connection or wireless coupling. The term "and/or" or the expression "at least one of..." used herein includes any and all combinations of one or more related listed items.

Unless otherwise defined, all terms used herein, including technical terms and scientific terms, have the same meaning as generally understood by those skilled in the art to which this disclosure belongs.

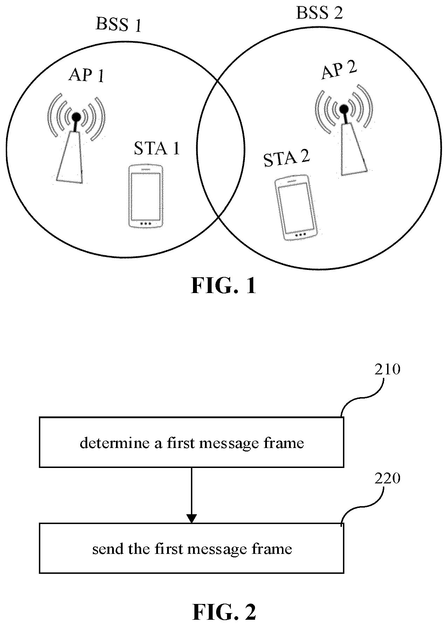

FIG. 1 is a schematic diagram illustrating a wireless communication scenario.

A Basic Service Set (BSS) can include an access point (AP) and one or more stations (STAs) that communicate with the AP. One BSS can connect to a Distribution System (DS) through its AP, and then connect to another BSS, to form an Extended Service Set (ESS).

In a wireless communication environment, generally, multiple BSSs may exist, such as BSS 1 and BSS 2 illustrated in FIG. 1. Each BSS may include an AP and one or more STAs. For brevity of description, in FIG. 1, the BSS 1 includes the AP 1 and the STA 1, and the BSS 2 includes the AP 2 and the STA 2. However, it is understandable that the number of BSSs, the number of APs in a BSS, and the number of STAs in a BSS illustrated in FIG. 1 are only examples and are not limited to the embodiments of the disclosure.

The AP (e.g., each of the AP1 and the AP2) is a wireless switch used for the wireless network and is a core of the wireless network. The AP device can be used as a wireless base station and mainly used as a bridge to connect the wireless network and a wired network. With this AP, the wired and wireless networks can be integrated.

The AP may include software applications and/or circuitries to enable other types of nodes in the wireless network to communicate with outside and inside of the wireless network via the AP. For example, the AP can be a terminal device or a network device equipped with a Wireless Fidelity (Wi-Fi) chip.

For example, the STA (e.g., each of the STA 1 and the STA 2) may include, but is not limited to: a cellular phone, a smart phone, a wearable device, a computer, a Personal Digital Assistant (PDA), a Personal Communication System (PCS) device, a Personal Information Manager (PIM), a Personal Navigation Device (PND), a global positioning system, a multimedia device, an Internet of Thing (IoT) device, and others.

In embodiments of the disclosure, the AP and the STAs may each be a device supporting the multi-link, denoted as AP MLD and STAs MLD respectively. For example, the AP MLD may represent an AP that supports ML communication capability, and the STA MLD may represent an STA that supports ML communication capability. For ease of description, in each BSS of FIG. 1, one AP MLD and one STA MLD are illustrated to communication on multiple links as an example, which is not limited in the embodiments of the disclosure.

For example, in the BSS 1 illustrated in FIG. 1, the AP 1 can also be denoted as AP 1 MLD and the STA 1 can be denoted as STA 1 MLD. The AP1 (AP1 MLD) and the STA 1 (or the (STA 1 MLD) can communicate with each other on multiple links. According to embodiments of the disclosure, the "multiple links" may be links at different frequencies, e.g., links at 2.4 GHz, 5 GHz, 6 GHz, or other frequencies. Or, the "multiple links" may be links in the same or different bandwidths of the same frequency. Moreover, there may be multiple channels on each link. The description related to the BSS 1 also applies to the BSS 2, and the repetitive description is omitted here for brevity. In the following, the AP and the AP MLD are used interchangeably, and the STA and the STA MLD are used interchangeably, for ease of description.

When APs in multiple BSSs are arranged densely in the wireless communication environment, there may be an overlap between coverage areas of these BBs, i.e., Overlapping BSSs (OBSSs), which leads to communication interference. Therefore, the spatial reuse (SR) technology is introduced to improve communication efficiency and spectrum utilization.

The existing SR technology is only applicable to the environment where a single link exists between the AP and the STA. In order to applicable to the above communication on multiple links, embodiments of the disclosure provide a communication method and a communication device described below.

FIG. 2 is a flowchart illustrating a communication method according to embodiments. The communication method illustrated in FIG. 2 can be performed by an AP.

As illustrated in FIG. 2, at step 210, a first message frame is determined. In embodiments of the disclosure, there may be various ways to determine the first message frame. For example, the AP may generate the first message frame based on at least one of the followings: network conditions, load conditions, hardware capabilities of a sending/receiving device, service types, and relevant protocol provisions, which is not specifically limited in embodiments of the disclosure. In embodiments of the disclosure, the AP may also obtain the first message frame from an external device, which is not limited in embodiments of the disclosure.

According to embodiments, the first message frame may include first information associated with spatial reuse of multiple links supported by the AP. The first information is used for spatial reuse in data interaction between the AP and the STA.

According to embodiments, the first information may include an SR parameter set element. The format of the SR parameter set element may be shown in Table 1 below.

**Table 1: SR parameter set element format**

| | | | | | | | | | |
|---|---|---|---|---|---|---|---|---|---|
| | Element ID | Length | Element ID Extension | SR Control | Non-SR GOBSS PD Max Offset | SRG OBSS RD Min Offset | SRG OBSS PD Max Offset | SRG BSS Color Bitmap | SRG Partial BSSID Bitmap |
| Octets: | 1 | 1 | 1 | 1 | 0 or 1 | 0 or 1 | 0 or 1 | 0 or 8 | 0 or 8 |

In an embodiment, the format of a field of the SR control in Table 1 can be shown in Table 2 below.

**Table 2: format of field of SR control**

| | | | | | | | |
|---|---|---|---|---|---|---|---|
| | B0 | B1 | B2 | B3 | B4 | B5 | B7 |
| | PSR Disallowed | Non-SRG OBSS PD SR Disallowed | Non-SRG Offset Present | SRG Information Present | HESIGA_S patial_reus e_valual5_ allowed | Reserved | |
| Bits: | 1 | 1 | 1 | 1 | 1 | 3 | |

It is understandable that each element in Table 1 or Table 2 exists independently. Listing these elements in the same table is an example, which does not mean that all elements shown in the table should exist simultaneously. A respective value of each element is independent of the value of any other element in Table 1. Therefore, it will be understandable by those skilled in the art that the respective value of each element in Table 1 or Table 2 is an independent embodiment.

As shown in Table 1 and Table 2, the SR parameter set element can provide information that is needed by the STA in performing an Overlapping BSS Packet Detect (OBSS PD)-based SR operation and a PSR-based SR operation.

As illustrated in FIG. 2, at step 220, the first message frame is sent. The first message frame can be sent at different stages of the communication between the AP and the STA.

According to embodiments of the disclosure, the first message frame may be a beacon frame. That is, the step of sending the first message frame may be performed during a process in which the AP broadcasts the beacon frame to cause the STA to find and access the AP. The first message frame may carry the first information in various ways.

In an embodiment, the first message frame may include a reduced neighbor report element, in which case the SR parameter set element (as shown in Table 1 and Table 2) may be included in the reduced neighbor report element. In addition, according to embodiments, the reduced neighbor report element may also include a subfield of MLD parameters. The subfield of MLD parameters includes information such as identification(s) (ID) of MLD(s) and a respective link ID corresponding to each link of the MLD(s). Therefore, the SR parameter set element and the link ID(s) may together indicate to perform the SR on a corresponding link.

In another embodiment, the first message frame can directly include a newly-defined SR parameter set element whose format differs from the format shown in Table 1 and Table 2. The newly-defined SR parameter set element includes link IDs, in addition to the content shown in Table 1 and Table 2. For example, an additional subfield can be added to Table 1 to indicate the link IDs. That is, the first information may include the SR parameter set element shown in Table 1 and Table 2 and the link IDs. The link IDs respectively correspond to links supported by the AP. In an example, each link of the multiple links corresponds to a respective link ID, i.e., there is a one-to-one correspondence between the multiple links and the link IDs. The above is only an example and is not used to limit embodiments of the disclosure. For example, the first information may include a link ID corresponding to a link that needs to perform the SR.

In another embodiment, the SR parameter set element can be in a MLD-level form, in which case the SR parameter set element is set to be identical for each of the multiple links. That is, in this case, since the same SR parameter set element is set for each link, it is possible to not carry the link ID.

In another embodiment of the disclosure, the first message frame may be a ML probe response frame. In this case, the step of sending the first message frame may be performed while establishing more links between the STA and the AP after the STA has connected to the AP. For example, when the AP receives, from the STA, a request frame for requesting to establish the ML communication with the AP, the AP may send the ML probe response frame carrying the first information (e.g., the SR parameter set element shown in Table 1 and Table 2) to the STA.

In the embodiment, the first message frame (e.g., the ML probe response frame) may include a ML element, and the SR parameter set element is included in the ML element. The ML element may include a field of element ID, a field of length, a field of element ID extension, a field of common information (common info), a field of per link information (link info), or others. It is understandable that each field included in the ML element is an illustrative example only, which is not considered as limiting the disclosure.

It is understandable that the types of the first message frame described above are illustrative examples only and are not considered as limiting the embodiments of the disclosure.

According to embodiments of the disclosure, the SR parameter set element may exist in a MLD-level form, in which case the SR parameter set element may be included in the field of common info of the ML element. According to another embodiment, the SR parameter set element may exist in a per-link form, in which case the SR parameter set element may be included in a field of per link profile.

According to embodiments, the SR parameter set element can be included in the reduced neighbor report element. Or, a new SR parameter set element (which contains the link IDs) can be defined, i.e., the new SR parameter set element can be simply represented as link IDs + SR parameter set. Or, the SR parameter set element can exist in the MLD-level form, i.e., the SR parameter set element can be set to be identical for each link.

According to embodiments, the SR parameter set element may be included in the ML probe response frame, e.g., in the ML element of the ML probe response frame. For example, if the SR parameter set element exist in a MLD-level form, the SR parameter set element may be included in the field of common info of the ML element. For example, if the SR parameter set element exists in a per-link form, the SR parameter set element may be included in the field of per link profile.

In the communication method illustrated in FIG. 2, the AP provides the STA with various parameters required for performing the OBSS PD-based SR operation and/or PSR-based SR operation, by carrying the SR parameter set element in the first message frame.

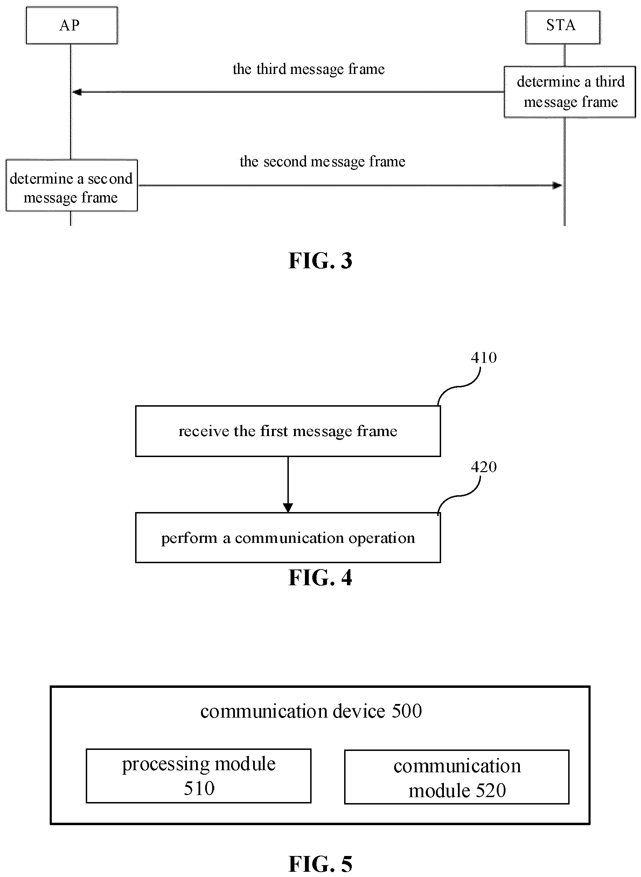

FIG. 3 is a flowchart illustrating a communication method according to embodiments. In the communication method illustrated in FIG. 3, the AP and the STA exchange capability information.

As illustrated in FIG. 3, the STA may determine and send a third message frame to the AP. The third message frame includes third information for indicating a SR capability of the STA. The AP may receive the third message frame from the STA and obtain the SR capability of the STA.

According to embodiments, the third information may include at least one of the followings: a first indicator for indicating whether a PSR responder is supported, or a second indicator for indicating whether a PSR-based SR operation is supported.

According to embodiments of the disclosure, there may be various ways to determine the third message frame. For example, the STA may generate the third message frame based on at least one of the followings: network conditions, load conditions, hardware capabilities of the sending/receiving device, service types, and relevant protocol provisions, which is not specifically limited in the embodiments of the disclosure. In embodiment of the disclosure, the STA may also obtain the third message frame from an external device, which is not limited in embodiments of the disclosure.

According to embodiments, the third message frame may be a probe request frame, an association request frame, a re-association request frame, or a ML probe request frame. It is understandable that the types of the third message frame described herein are illustrative examples only and are not considered as limiting embodiments of the disclosure.

As illustrated in FIG. 3, the AP may determine and send the second message frame to the STA. The second message frame may include second information for indicating a SR capability of the AP. The STA may receive the second message frame from the AP and obtain the SR capability of the AP.

According to embodiments, the second information includes at least one of the followings: a third indicator for indicating whether a PSR responder is supported or a fourth indicator for indicating whether a PSR-based SR operation is supported.

According to embodiments of the disclosure, there may be various ways to determine the second message frame. For example, the AP may generate the second message frame based on at least one of the followings: network conditions, load conditions, hardware capabilities of the sending/receiving device, service types, and relevant protocol provisions, which is not specifically limited in embodiments of the disclosure. In embodiment of the disclosure, the AP may also obtain the second message frame from an external device, which is not limited in embodiments of the disclosure.

According to embodiments, the second message frame may be a probe response frame, an association response frame, a re-association response frame, or a ML probe response frame. It is understandable that the types of the second message frame described herein are illustrative examples only and are not considered as limiting the embodiments of the disclosure.

According to embodiments, the second message frame and the third message frame can carry, in a format of capability element, the second information (the third indicator and/or the fourth indicator) and the third information (the first indicator and/or the second indicator) respectively.

In an embodiment, any one of the second message frame and the third message frame may include a respective extreme high-throughput (EHT) capability element. The second information (the third indicator and/or the fourth indicator) can be included in the EHT capability element of the second message frame, and the third information (the first indicator and/or the second indicator) can be included in the EHT capability element of the third message frame.

It is understandable that "the third indicator and the fourth indicator" of the second information or "the first indicator and the second indicator" of the third information may be included in different subfields of the EHT capability element or included in different capability elements. For example, the EHT capability element may include an EHT MAC capability element and an EHT PHY capability element. For the third information, the first indicator may be included in the EHT MAC capability element of the third message frame and the second indicator may be included in the EHT PHY capability element of the third message frame. For the second information, the third indicator may be included in the EHT MAC capability element of the second message frame, and the fourth indicator may be included in the EHT PHY capability element of the second message frame. The above is only an example and is not used to limit the disclosure. For example, "the third indicator and the fourth indicator" of the second information or "the first indicator and the second indicator" of the third information may be included in the same subfield of the EHT capability element.

In another embodiment, any one of the second message frame and the third message frame may include an ML element. For the third information, the first indicator and/or the second indicator may be included in the ML element of the third message frame. For the second information, the third indicator and/or the fourth indicator may be included in the ML element of the second message frame.

According to embodiments, the first indicator and the third indicator can be represented as a subfield of PSR Responder in the EHT MAC capability element. The detailed description of the subfield of PSR Responder can be shown in Table 3 below.

**Table 3: Description of PSR Responder**

| | | |
|---|---|---|
| PSR Responder | indicates support for the role of PSR responder | set to 1 if the AP or the STA supports role of PSR Responder. Otherwise, set to 0. |

In an embodiment, the second indicator and the fourth indicator can be represented as a subfield of PSR-based SR Support in the EHT PHY capability element. The detailed description of the subfield of PSR-based SR Support is shown in Table 4 below.

**Table 4: Description of PSR-based SR Support**

| | | |
|---|---|---|
| PSR-based SR Support | indicates support for PSR-based SR operation | set to 1 if the AP or the STA supports the PSR-based SR operation. Otherwise, set to 0. |

According to the communication method illustrated in FIG. 3, the AP may notify the STA of the SR capability information of the AP via the second information (i.e., the third indicator and/or the fourth indicator) carried in the second message frame. The STA may notify the AP of the SR capability information of the STA via the third information (i.e., the first indicator and/or the second indicator) carried in the third message frame.

In addition, the second information and the third information may be referred to as a subfield of SR. According to embodiments of the disclosure, the subfield of SR may be defined on the MLD level, which may be included in the EHT capability element or included in the ML element.

According to embodiments, the subfield of SR may be included in the EHT capability element, and this setting is shown in Table 3 and Table 4 above.

According to embodiments, the subfield of SR may be included in the ML element and can be identified, for example, using a subfield of common info in the ML element.

For the subfield of SR included in the EHT capability element and the subfield of SR included in the ML element, the STA (e.g., EHT MLD STA) may encapsulate these subfields of SR in a probe request frame, an association request frame, a re-association request frame, or a ML probe request frame; and the AP (e.g., EHT MLD AP) may encapsulate these subfields of SR in a probe response frame, an association response frame, a re-association response frame, or a ML probe response frame.

Although FIG. 3 illustrates the operation that the STA determines and sends the third message frame to the AP and the operation that the AP determines and sends the second message frame to the STA, these two operations may not co-exist at the same time. In an implementation, the AP may have a SR capability by default (e.g., at the time of hardware manufacture or software design), and the STA may know in advance that the AP has the SR capability, such that the AP may not send the second message frame to the STA. In other words, the operation performed by the AP in FIG. 3 may be omitted. In another implementation, the STA may have a SR capability by default (e.g., at the time of hardware manufacture or software design), and the AP may know in advance that the STA has the SR capability, such that the STA may not send the third message frame to the AP. In other words, the operation performed by the STA in FIG. 3 may be omitted.

In addition, although FIG. 2 and FIG. 3 separately illustrate the communication method according to embodiments of the disclosure, FIG. 2 and FIG. 3 may be combined. For example, the communication method illustrated in FIG. 3 may be performed firstly to cause the AP and the STA to exchange the SR capability information and other capability information, and then the communication method illustrated in FIG. 2 is performed to cause the AP to allocate parameters that is required to perform the SR to the STA. The communication method is only an example, and each step illustrated in FIG. 2 and FIG. 3 may be changed and some of these operations may be performed in parallel.

In addition, the communication method according to embodiments of the disclosure may omit the communication method illustrated in FIG. 3. For example, when both the AP and the STA have respective SR capabilities by default, there is no need to interact with each other for exchanging the SR capability information in advance, and thus the communication method illustrated in FIG. 3 may be omitted.

According to the communication method illustrated in FIG. 2 and FIG. 3, the SR technology can be applied on multiple links, to improve the utilization efficiency of spectrum and system throughput.

FIG. 4 is a flowchart illustrating another communication method according to embodiments. The communication method illustrated in FIG. 4 can be performed by a STA.

As illustrated in FIG. 4, at step 410, a first message frame is received. For example, the STA may receive the first message frame from the AP. The first message frame includes first information associated with SR of multiple links supported by the AP. The first information is used for SR in data interaction between the STA and the AP.

According to embodiments, the first information may include a SR parameter set element. The SR parameter set element may be as shown in Table 1 and Table 2 above, and the repetitive description is omitted here for brevity.

According to embodiments, the first message frame includes a reduced neighbor report element. The SR parameter set element is included in the reduced neighbor report element.

According to embodiments, the first information further includes link IDs, and the link IDs corresponding to the multiple links respectively.

According to embodiments, the SR parameter set element is set to be identical for each of the multiple links between the STA and the AP.

According to embodiments, the first message frame includes a ML element, and the SR parameter set element is included in the ML element.

According to embodiments, the ML element includes a field of common info, and the SR parameter set element is included in the field of common info.

According to embodiments, the ML element includes a field of per link profile, and the SR parameter set element is included in the field of per link profile.

At step 420, the STA performs a communication operation based on the first information. For example, the STA may adjust a transmission power for the SR based on the SR parameter set element.

In addition, although not shown, the communication method illustrated in FIG. 4 may further include receiving a second message frame. The second message frame includes second information for indicating a SR capability of the AP.

In addition, although not shown, the communication method illustrated in FIG. 4 may further include sending a third message frame. The third message frame includes third information for indicating a SR capability of the STA.

According to embodiments, the second information or the third information includes at least one of the followings:
an indicator for indicating whether a PSR responder is supported; or
an indicator for indicating whether a PSR-based SR operation is supported.

The above-mentioned two indicators can be similar to those described above with reference to Table 3 and Table 4, and the repeated description is omitted here for brevity.

In addition, the indicators included in any one of the second information and the third information may be referred to as subfield of SR. The subfield of SR may be defined on an MLD level according to embodiments of the disclosure. The subfield of SR may be included in the EHT capability element or included in the ML element.

According to embodiments, the subfield of SR can be included in the EHT capability element and this setting can be as shown in Table 3 and Table 4 above.

According to embodiments, the subfield of SR can be included in the ML element and can be identified, for example, using a subfield of common info of the ML element.

For the subfield of SR included in the EHT capability element and the subfield of SR included in the ML element, the STA (e.g., EHT MLD STA) may encapsulate these subfields of SR in a probe request frame, an association request frame, a re-association request frame, or a ML probe request frame; and the AP (e.g., EHT MLD AP) may encapsulate these subfields of SR in a probe response frame, an association response frame, a re-association response frame, or a ML probe response frame.

According to embodiments, any one of the second message frame and the third message frame may include an EHT capability element, and at least one of the above two indicators can be included in the EHT capability element.

According to embodiments, any one of the second message frame and the third message frame may include a ML element, and at least one of the above two indicators can be included in the ML element.

The first message frame, the first information, the second message frame, the second information, the third message frame, and the third information in FIG. 4 may be similarly described with reference to FIG. 2 and FIG. 3, and the repeated description is omitted herein for brevity.

FIG. 5 is a block diagram illustrating a communication device according to embodiments. The communication device 500 may include a processing module 510 and a communication module 520. The communication device illustrated in FIG. 5 may be applied to an AP or a STA.

When the communication device 500 illustrated in FIG. 5 is applied to the AP, the processing module 510 is configured to determine a first message frame. The first message frame includes first information associated with SR of multiple links supported by the AP, and the first information is used for SR in data interaction between the AP and a STA. The communication module 520 is configured to send the first message frame.

That is, when the communication device 500 illustrated in FIG. 5 is applied to an AP, the communication device 500 may perform the communication method illustrated in FIG. 2 and the communication operation performed by the AP illustrated in FIG. 3, the repetitive description of which is omitted herein for brevity.

When the communication device 500 illustrated in FIG. 5 is applied to the STA, the communication module 520 is configured to receive a first message frame. The first message frame includes first information associated with SR of multiple links supported by an AP, and the first information is used for SR in data interaction between the AP and the STA. The processing module 510 is configured to control the communicating module 520 to perform a communication operation based on the first information.

That is, when the communication device 500 illustrated in FIG. 5 is applied to the STA, the communication device 500 may perform the communication method illustrated in FIG. 4 and the communication operation performed by the STA illustrated in FIG. 3, the repetitive description of which is omitted herein for the sake of brevity.

It is understandable that the communication device 500 illustrated in FIG. 5 is only an example and is not used to limit embodiments of the disclosure. For example, the communication device 500 may also include other modules, e.g., a memory module. In addition, each module in the communication device 500 may be combined into more complex modules or may be divided into more separate modules.

According to the communication method depicted with reference to FIGS. 2 to 4, the communication device depicted with reference to FIG. 5 enables the application of SR techniques on multiple links, to improve the utilization efficiency of spectrum and system throughput.

Based on the same principles as the method provided in the embodiments of the disclosure, embodiments of the disclosure also provide an electronic device including a processor and a memory. The memory stores machine-readable instructions (which may also be referred to as "computer programs"), and the processor is configured to execute the machine-readable instructions, to implement the method described with reference to FIGS. 2 to 4.

Embodiments of the disclosure also provide a computer-readable storage medium having computer programs stored thereon. When the computer programs are executed by a processor, the method described with reference to FIGS. 2 to 4 is implemented.

In the exemplary embodiments, the processor may be a logic box, a module, or a circuit, for implementing or executing various embodiments described in the disclosure, for example, a Central Processing Unit (CPU), a general processor, a Digital Signal Processor (DSP), an Application Specific Integrated Circuit (ASIC), a Field Programmable Gate Array (FPGA) or other programmable logic devices, a transistor logic device, a hardware component, or any combination thereof. The processor may also be a combination used to implement a computing function, for example, a combination consisting of one or more microprocessors, and a combination consisting of DSPs and microprocessors.

In the exemplary embodiments, the memory may be, for example, a Read Only Memory (ROM), a Random Access Memory (RAM), an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store program codes in the form of instructions or data structures and can be accessed by a computer, which is not limited herein.

It should be understood that although steps in the flowchart of the accompanying drawings are shown sequentially as indicated by the arrows, the steps are not necessarily performed sequentially in the order indicated by the arrows. Unless explicitly stated otherwise in the disclosure, there is no strict sequential limitation on the execution of these steps, which may be performed in any other order. In addition, at least some of the steps in the flowchart of the accompanying drawings may include a plurality of sub-steps or a plurality of phases, which are not necessarily executed at the same time, but may be executed at different times. The execution order is not necessarily sequential, and the steps can be performed alternately or alternatively with other steps or at least part of sub-steps or phases of other steps.

Although the disclosure has been shown and described with reference to the embodiments of the disclosure, it will be understood by those skilled in the art that various changes in form and detail can be made without departing from the scope of the disclosure. Accordingly, the scope of the disclosure should not be limited by the embodiments, but should be defined by the appended claims and their equivalents.

## Claims

1. A communication method, applied in an access point, the method comprising:
determining a first message frame, wherein the first message frame comprises first information associated with spatial reuse of multiple links supported by the access point, and the first information is used for spatial reuse in data interaction between the access point and a station; and
sending the first message frame.

2. The method of claim 1, wherein the first information comprises a spatial reuse parameter set element.

3. The method of claim 2, wherein the first message frame comprises a reduced neighbor report element, and
the reduced neighbor report element comprises the spatial reuse parameter set element.

4. The method of claim 2, wherein the first information further comprises link identifications, and
the link identifications correspond to the multiple links respectively.

5. The method of claim 2, wherein the spatial reuse parameter set element is set to be identical for each of the multiple links.

6. The method of claim 2, wherein the first message frame comprises a Multi-Link element, and
the spatial reuse parameter set element is comprised in the Multi-Link element.

7. The method of claim 6, wherein the Multi-Link element comprises: a field of common info, and
the spatial reuse parameter set element is comprised in the field common info.

8. The method of claim 6, wherein the Multi-Link element comprises a field of per link profile, and
the spatial reuse parameter set element is comprised in the field of per link profile.

9. The method of claim 1, further comprising: determining and sending a second message frame,
wherein the second message frame comprises second information for indicating a spatial reuse capability of the access point.

10. The method of claim 1, further comprising: receiving a third message frame,
wherein the third message frame comprises third information for indicating a spatial reuse capability of the station.

11. The method of claim 9 or 10, wherein any one of the second information and the third information comprises at least one of the followings:
a first indicator for indicating whether a parameterized spatial reuse responder is supported; or
a second indicator for indicating whether a parameterized spatial reuse based spatial reuse operation is supported.

12. The method of claim 11, wherein any one of the second message frame and the third message frame comprises: an extreme high-throughput capability element, and
the first indicator and/or the second indicator is comprised in the extreme high-throughput capability element.

13. The method of claim 11, wherein any one of the second message frame and the third message frame comprises a Multi-Link element, and
the first indicator and/or the second indicator is comprised in the Multi-Link element.

14. A communication method, applied in a station, the method comprising:
receiving a first message frame, wherein the first message frame comprises first information associated with spatial reuse of multiple links supported by an access point, and the first information is used for spatial reuse in data interaction between the access point and the station; and
performing a communication operation based on the first information.

15. The method of claim 14, wherein the first information comprises a spatial reuse parameter set element.

16. The method of claim 15, wherein the first message frame comprises a reduced neighbor report element, and
the spatial reuse parameter set element is comprised in the reduced neighbor report element.

17. The method of claim 15, wherein the first information further comprises link identifications, and
the link identifications correspond to the multiple links respectively.

18. The method of claim 15, wherein the spatial reuse parameter set element is set to be identical for each of the multiple links.

19. The method of claim 15, wherein the first message frame comprises a Multi-Link element, and
the spatial reuse parameter set element is comprised in the Multi-Link element.

20. The method of claim 19, wherein the Multi-Link element comprises a field of common info, and
the spatial reuse parameter set element is comprised in the field of common info.

21. The method of claim 19, wherein the Multi-Link element comprises a field of per link profile, and
the spatial reuse parameter set element is comprised in the field per link profile.

22. The method of claim 14, further comprising:
receiving a second message frame, wherein the second message frame comprises second information for indicating a spatial reuse capability of the access point.

23. The method of claim 14, further comprising:
sending a third message frame, wherein the third message frame comprises third information for indicating a spatial reuse capability of the station.

24. The method of claim 22 or 23, wherein any one of the second information and the third information comprises at least one of the followings:
a first indicator for indicating whether a parameterized spatial reuse responder is supported; or
a second indicator for indicating whether a parameterized spatial reuse based spatial reuse operation is supported.

25. The method of claim 24, wherein any one of the second message frame and the third message frame comprises an extreme high-throughput capability element, and
the first indicator and/or the second indicator is comprised in the extreme high-throughput capability element.

26. The method of claim 24, wherein any one of the second message frame and the third message frame comprises a Multi-Link element, and
the first indicator and/or the second indicator is comprised in the Multi-Link element.

27. A communication device on multiple links, applicable to an access point, the device comprising:
a processing module, configured to determine a first message frame, wherein the first message frame comprises first information associated with spatial reuse of multiple links supported by the access point, and the first information is used for spatial reuse in data interaction between the access point and a station; and
a communication module, configured to send the first message frame.

28. A communication device on multiple links, applicable to a station, the device comprising:
a communication module, configured to receive a first message frame, wherein the first message frame comprises first information associated with spatial reuse of multiple links supported by an access point, and the first information is used for spatial reuse in data interaction between the access point and the station; and
a processing module, configured to control the communication module to perform a communication operation based on the first information.

29. An electronic device, comprising:
a memory;
a processor; and
a computer program stored on the memory and executable by the processor;
wherein when the computer program is executed by the processor, a method of any one of claims 1 to 13 or 14 to 26 is performed.

30. A computer-readable storage medium, having a computer program stored thereon, wherein when the computer program is executed by a processor, a method of any one of claims 1 to 13 or 14 to 26 is performed.
